# EUROPÄISCHE PATENTANMELDUNG

(11) **EP 1 033 507 A1**
(43) Veröffentlichungstag der Anmeldung: **06.09.2000**
(21) Anmeldenummer: 99104315.9
(22) Anmeldetag: 04.03.1999
(51) Int. Cl.: F16F 1/42, F16F 1/26

(54) **Federanordnung**

(71) Anmelder: Baumann Federn AG, 8630 Rüti (CH)
(72) Erfinder: Geisel, Alwin Dipl. Ing., CH-8630 Rüti (CH)
(74) Vertreter: Möbus, Daniela, Dr.-Ing.

(57) **Zusammenfassung**

Eine Federanordnung mit mindestens einem langgestreckten, im entspannten Zustand im Wesentlichen in Federkraftrichtung ausgerichteten Federelement (10), das an seinen Enden in einer Aufnahmevorrichtung (11) fest eingespannt oder drehbar gelagert ist, sodass es bei Belastung in seiner Längsrichtung quer zu seiner Längsachse ausknicken kann.

## Beschreibung

Bisher bekannte querbelastete Biegefedern nach DIN 2192 weisen ebenso wie die meisten anderen gebräuchlichen Federtypen wie Schraubendruck- oder Schraubenzugfedern eine lineare Federkennlinie auf, d. h. die Federkraft ist proportional zum Federweg. Die Steigung der Federkennlinie wird als Federrate bezeichnet.

Für bestimmte Anwendungsfälle, beispielsweise bei Federn für Messvorrichtungen oder zur Verschleißkompensation ist jedoch eine konstante, wegunabhängige Federkraft gefordert. Für diese Anwendungsbereiche wurden daher schon verschiedene Sonderkonstruktionen von Federn entwickelt. Relativ teure und aufwendige Konstruktionen sind hierbei Rollfedern oder Triebfedern aus Band oder auch Schrauben-Knickfedern. Eine weitere Feder mit konstanter Federkraft ist die querbelastete Schraubenwendel mit verkippten Windungen, doch ist bei dieser Feder nur ein sehr kleiner Bereich der Kennlinie exakt horizontal ausgerichtet und damit nutzbar. Federscheiben oder Tellerfedern weisen zwar eine relativ flache, doch keine horizontale Kraft-Weg-Kennlinie auf. Außerdem ist der Federweg bei diesen Federn sehr kurz.

Der vorliegenden Erfindung liegt die Aufgabe zugrunde, eine Federanordnung vorzuschlagen, die eine konstante Federkraft über einen relativ großen Bereich des Federwegs aufweist und dabei die oben genannten Nachteile vermeidet.

Die Aufgabe wird gelöst durch eine Federanordnung mit mindestens einem langgestreckten, im entspannten Zustand im Wesentlichen in Federkraftrichtung ausgerichteten Federelement, das an seinen Enden in einer Aufnahmevorrichtung fest eingespannt oder drehbar gelagert ist, sodass es bei Belastung in seiner Längsrichtung quer zu seiner Längsachse ausknicken kann. Je stärker die Belastung auf die erfindungsgemäße Federanordnung ist, desto stärker knickt das mindestens eine Federelement aus. Dies bedeutet, dass die Erhöhung der Federkraft beim Ausknicken des mindestens einen Federelements durch die Vergrößerung des Hebelarms der Federkraft, der der Auslenkung der Feder beim Ausknicken entspricht, kompensiert wird, wodurch die Federanordnung insgesamt eine konstante Federkraft über einen großen Bereich des Federwegs aufweist. Wie jede andere Feder darf auch diese Gleichkraft-Knickfederanordnung allerdings nur bis kurz vor die Deformationsgrenze der Federelemente beansprucht werden.

Die Enden des mindestens einen Federelements können in Aufnahmepfannen oder durch Achselemente drehbar in der Aufnahmevorrichtung gelagert sein. Dabei können die Achselemente entweder separate Elemente oder aber aus dem Material des Federelements geformt sein. Es ist auch möglich, ein Ende des mindestens einen Federelements in der Aufnahmevorrichtung fest einzuspannen und das andere Ende drehbar zu lagern. Die Gleichkraftcharakteristik der Federanordnung ist in jedem Fall gewährleistet.

Es kann auch mindestens ein Ende des Federelements fest in der Aufnahmevorrichtung eingespannt und die Aufnahmevorrichtung um den Einspannpunkt drehbar sein, sodass das Federelement bei Belastung in seiner Längsrichtung ausknicken kann.

Die Federanordnung kann mit allen Arten von langgestreckten Federelementen realisiert werden. So kann das Federelement beispielsweise einen runden, einen quadratischen oder einen rechteckigen Querschnitt aufweisen, wobei der rechteckige Querschnitt besondere Vorteile aufweist, weil er die beste Materialausnutzung ergibt. Außerdem ist bei einem solchen bandförmigen Federelement die Knickebene eindeutig definiert.

Um einen möglichst großen Abschnitt der Federkennlinie für Gleichkraftanwendungen nutzen zu können, ist es vorteilhaft, wenn das Verhältnis der Länge des mindestens einen Federelements zu seiner Dicke oder seinem Durchmesser sehr groß ist. Es ist außerdem vorteilhaft, eine relativ hohe Materialfestigkeit für die Federelemente zu wählen.

Zur Beeinflussung der Biegelinien sowie der maximal möglichen Beanspruchung der Federelemente können sich die Breite, die Dicke oder der Durchmesser des mindestens einen Federelements über seine Länge verändern.

Soll die Federkraft der Anordnung erhöht werden, kann sowohl die Breite des mindestens einen Federelements erhöht als auch eine parallele Anordnung mehrerer Federelemente vorgesehen werden.

Der Federweg lässt sich erhöhen, wenn die Anordnung mehrere, hintereinander angeordnete und über seitlich in einer Kulisse der Aufnahmevorrichtung geführte Achselemente verbundene Federelemente aufweist.

Nachfolgend werden bevorzugte Ausführungsbeispiele einer erfindungsgemäßen Federanordnung anhand der Zeichnung näher erläutert.

Es zeigen:
- Fig. 1: eine Draufsicht und eine Seitenansicht eines streifenförmigen Federelements;
- Fig. 2a - 2f: Schnittansichten verschiedener Beispiele von Federanordnungen mit einem Federelement gemäß Fig.1;
- Fig. 3a - 3c: den Fig. 2a, 2b und 2d entsprechende Darstellungen von Federanordnungen unter Belastung;
- Fig. 4: eine Federkennlinie einer Federanordnung nach Fig. 2;
- Fig. 5a, 5b: eine Schnittansicht einer querbelasteten Biegefeder mit zugehöriger Federkennlinie;
- Fig. 6a - 6c: Draufsichten und Schnittansichten von Federanordnungen mit einer hohen Federkraft;
- Fig. 7: eine Schnittansicht einer Federanordnung mit großem Federweg im entspannten und belasteten Zustand;
- Fig. 8: eine den Fig. 3a bis 3c entsprechende Darstellung einer weiteren Federanordnung unter Belastung.

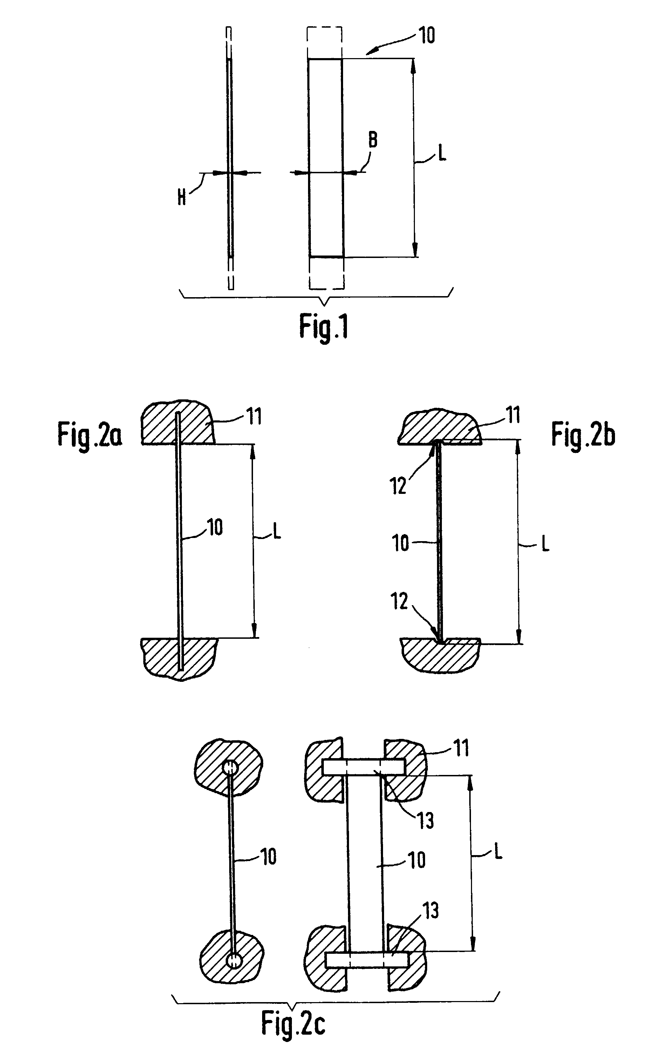

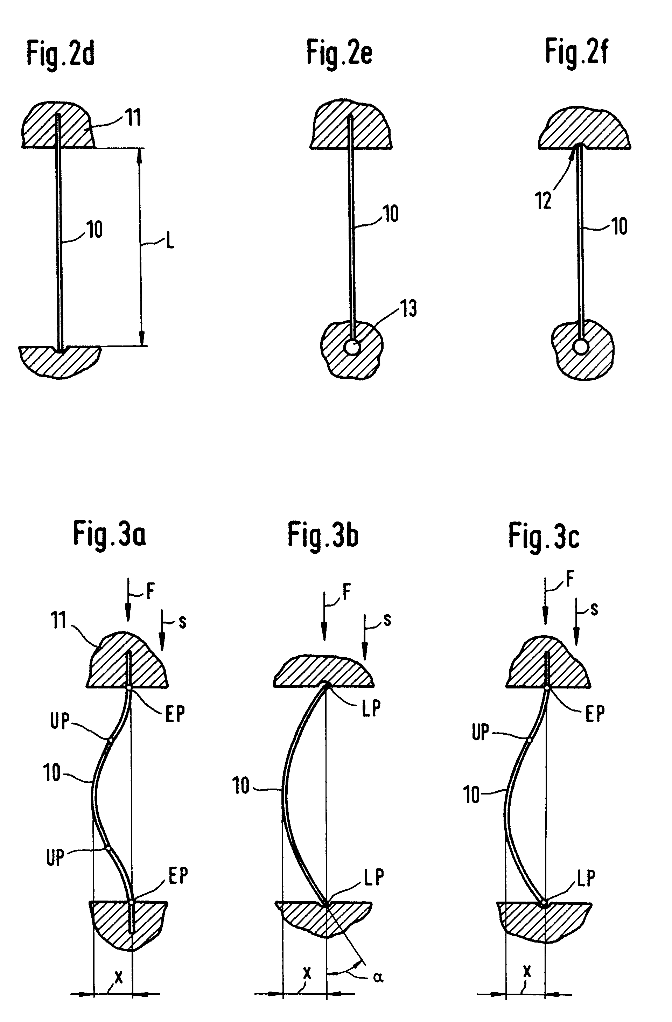

Fig. 1 zeigt in der Draufsicht und in der Seitenansicht ein blattförmiges Federelement 10, wie es in einer erfindungsgemäßen Federanordnung eingesetzt werden kann. Es weist eine Länge L, eine Breite B sowie eine Dicke H auf. Bei der Länge L ist nur der elastisch verformbare Bereich berücksichtigt und nicht auch die gestrichelt eingezeichneten Enden des Federelements 10, die beispielsweise in einer Aufnahmevorrichtung 11 fest eingespannt sein können, wie in Fig. 2a gezeigt ist. In Fig. 2 sind außerdem weitere Federanordnungen mit Federelementen 10 gezeigt, die sich in der Art der Lagerung der Enden der Federelemente unterscheiden. In Fig. 2b sind die Enden des Federelements 10 nicht fest eingespannt, sondern in Pfannen 12 drehbar gelagert. Hier ist nun die gesamte Länge des Federelements gleich der elastisch verformbaren Länge L des Federelements 10. Auch Fig. 2c zeigt eine drehbare Lagerung der Enden eines Federelements 10 in einer Aufnahmevorrichtung 11, wobei hier die drehbare Lagerung jedoch durch zwei Achselemente 13 erreicht wird, die entweder als separate Elemente ausgebildet oder aber aus dem Material des Federelements 10 hergestellt sein können. Wie die Fig. 2d und 2e zeigen, kann auch jeweils ein Ende des Federelements 10 fest eingespannt und das andere Element drehbar in der Aufnahmevorrichtung 11 angeordnet sein. In Fig. 2f sind für die Lagerung der beiden Enden die verschiedenen Möglichkeiten nach Fig. 2b und Fig. 2c vorgesehen.

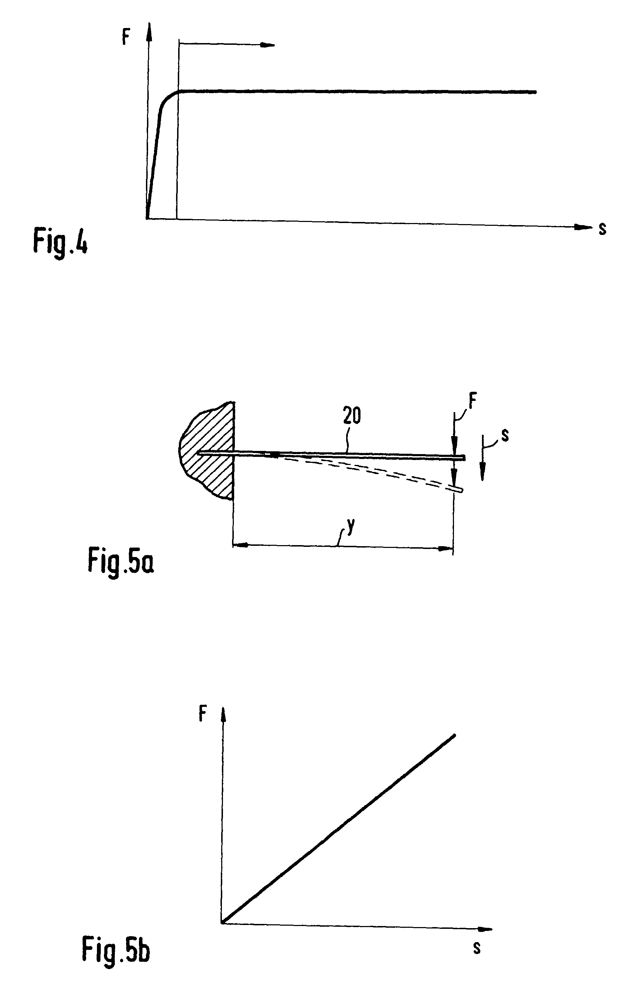

Die Fig. 3a bis 3c zeigen nun die Federanordnungen aus den Fig. 2a, 2b und 2d unter Belastung. Auf die Aufnahmevorrichtung 11 wirkt jeweils eine parallel zur Längsachse des Federelements 10 gerichtete Kraft F. Unter dieser Kraft F knickt das Federelement 10 aus und verkürzt sich in der Länge um die Strecke s. Die horizontale Auslenkung des Federelements 10 beim Ausknicken wird mit x bezeichnet. Sie entspricht dem Hebelarm der Federkraft des Federelements 10. Mit EP sind jeweils die Einspannpunkte, mit LP die Lagerpunkte bei drehbarer Anordnung der Enden des Federelements 10 und mit UP die Umkehrpunkte der Biegelinie der Federelemente 10 bezeichnet. Im Umkehrpunkt UP weist das Federelement kein Biegemoment auf. An dieser Stelle herrscht ausschließlich eine Scherbeanspruchung. Falls der Querschnitt der Federelemente 10 über die gesamte Länge konstant ist, sind die Biegelinien zwischen den Punkten UP-UP und UP-EP in Fig. 3a, den Punkten LP-LP in Fig. 3b und den Punkten UP-LP und UP-EP in Fig. 3c in etwa parabelförmig. Die in den Fig. 3a bis 3c gezeigten Federanordnungen weisen eine nahezu horizontale Federkraftkennlinie auf, wie sie in Fig. 4 gezeigt ist, sobald die Federelemente 10 ausknicken.

Im Gegensatz dazu ist in Fig. 5a und in Fig. 5b der Aufbau und die Federkraftkennlinie einer querbelasteten Biegefeder 20 nach DIN 2192 gezeigt. Die Biegefeder 20 ist einseitig eingespannt und wird an ihrem freien Ende durch eine Kraft F beaufschlagt, wodurch sie um die Strecke s ausgelenkt wird. Dabei ist die Federkraft F proportional zum Federweg s, wie in Fig. 5b gezeigt ist. Der Grund hierfür liegt darin, dass der Hebelarm y der Federkraft F über den Federweg s im Wesentlichen konstant ist.

Im Gegensatz dazu wird bei den Federanordnungen nach Fig. 3 der Hebelarm, der hier der Knickauslenkung x entspricht, mit zunehmender Einfederung größer, wodurch die natürliche Erhöhung der Biege-Federkraft durch die Vergrößerung des Hebelarms x kompensiert wird. Daraus resultiert das Gleichkraftverhalten der Federanordnungen.

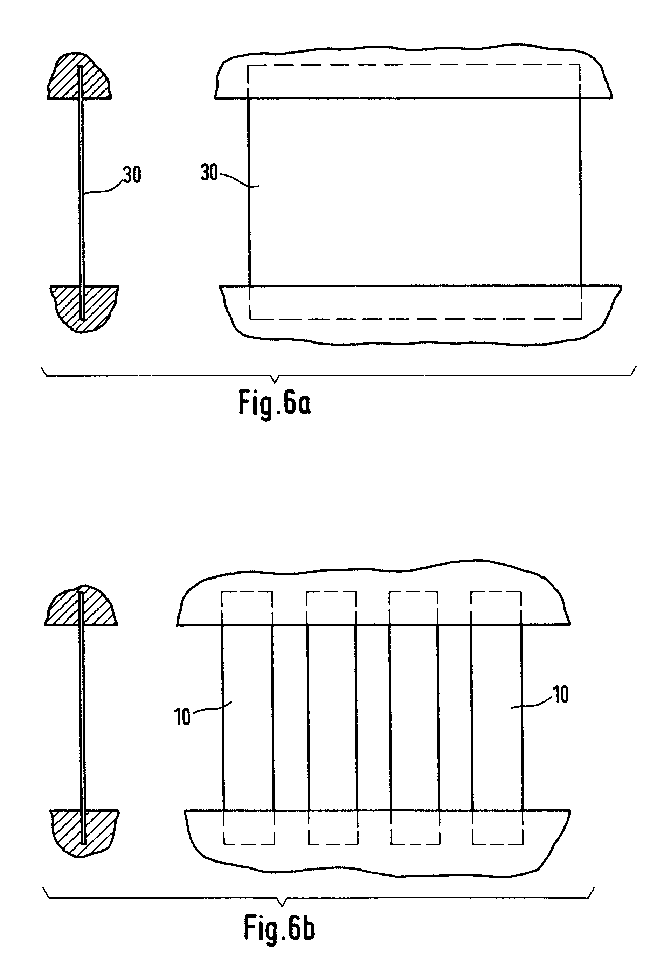

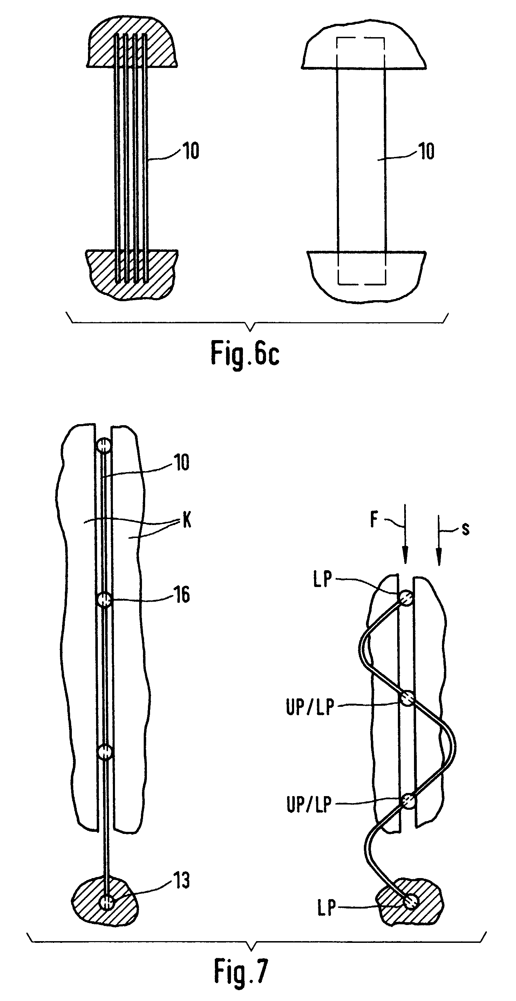

Falls die Federkraft F gegenüber den Federanordnungen in Fig. 3 erhöht werden soll, können Federanordnungen gemäß den Fig. 6a bis 6c gewählt werden. Beim Federelement 30 nach Fig. 6a ist die Breite wesentlich größer als bei den Federelementen 10 der Federanordnungen aus Fig. 3. In Fig. 6b ist eine Parallelschaltung mehrerer Federelemente 10 gezeigt, die ebenfalls zu einer Erhöhung der Federkraft führt. Bei der in Fig. 6c gezeigten Variante wird ein geschichtetes Federpaket aus Federelementen 10 mit Distanzstücken eingesetzt. Bei dieser Anordnung ist eine geringfügige Vorbiegung der Federelemente 10 erforderlich, damit alle Elemente in die gleiche Richtung ausknicken.

Auch bei Einzelfedern nach Fig. 3 kann eine geringfügige Vorbiegung erforderlich sein, wenn der zur Verfügung stehende Bauraum die Ausknickbewegung nur in eine definierte Richtung zulässt.

Fig. 7 zeigt eine Anordnung, bei der der Federweg s gegenüber den Federanordnungen aus Fig. 3 erhöht ist. Dies wird durch eine Hintereinanderschaltung mehrerer Federelemente 10 erreicht, die über Achselemente 16 fest oder gelenkig miteinander verbunden sind. Die Enden der Achselemente 16 werden seitlich in einer Kulisse K geführt, wodurch sich die gesamte Anordnung etwa sinusförmig elastisch verformen kann, wenn eine Kraft F in Längsrichtung der Federelemente 10 auf die Anordnung ausgeübt wird. Die Achselemente 16 stellen dabei im mittleren Bereich sowohl Lagerpunkte LP als auch Umkehrpunkte UP der Biegelinie der gesamten Anordnung dar.

Die dargestellten Federelemente als rechteckige Elemente sind lediglich beispielhaft. Es können sämtliche Formen stabförmiger Federelemente, beispielsweise auch mit rundem oder quadratischem Querschnitt verwendet werden.

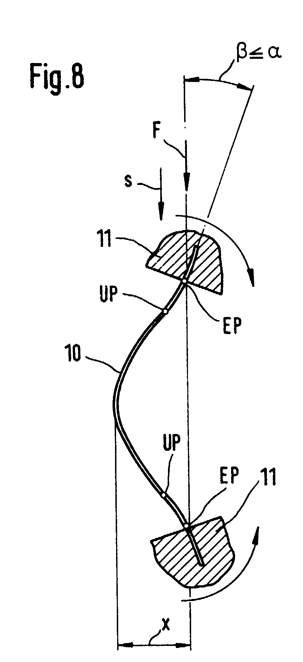

Fig. 8 zeigt ein weiteres Beispiel einer Gleichkraft-Federanordnung unter Belastung. Die Enden des Federelements 10 sind fest in der Aufnahmevorrichtung 11 eingespannt. Die Aufnahmevorrichtung ist jetzt jedoch aktiv um die Einspannpunkte EP um einen Winkel β drehbar, sodass das Federelement unter Einwirkung der Kraft F ausknickt. Im Vergleich zu dem in Fig. 3b gezeigten Fall der passiv drehbaren Einspannung ist der Winkel β, den die Federelementenden bei der aktiv drehbaren Einspannung einnehmen, geringer als der Winkel α. Die Umkehrpunkte UP liegen hier außerdem dichter an den Einspannpunkten EP als bei der fest eingespannten Feder 10 in Fig. 3a.

## Patentansprüche

1. Federanordnung mit mindestens einem langgestreckten, im entspannten Zustand im Wesentlichen in Federkraftrichtung ausgerichteten Federelement (10, 30), das an seinen Enden in einer Aufnahmevorrichtung (11) fest eingespannt oder drehbar gelagert ist, sodass es bei Belastung in seiner Längsrichtung quer zu seiner Längsachse ausknicken kann.

2. Federanordnung nach Anspruch 1, dadurch gekennzeichnet, dass die Enden des mindestens einen Federelements (10, 30) in Aufnahmepfannen (12) oder durch Achselemente (13) drehbar in der Aufnahmevorrichtung (11) gelagert sind.

3. Federanordnung nach Anspruch 2, dadurch gekennzeichnet, dass die Achselemente (13) aus dem Material des Federelements (10) geformt sind.

4. Federanordnung nach einem der Ansprüche 1 bis 3, dadurch gekennzeichnet, dass ein Ende des mindestens einen Federelements (10) in der Aufnahmevorrichtung (11) fest eingespannt und das andere Ende drehbar gelagert ist.

5. Federanordnung nach Anspruch 1, dadurch gekennzeichnet, dass mindestens ein Ende des mindestens einen Federelements (10, 30) fest in der Aufnahmevorrichtung (11) eingespannt ist, und die Aufnahmevorrichtung (11) um den Einspannpunkt (EP) des Endes um einen Winkel (β) drehbar ist, sodass das mindestens eine Federelement (10, 30) bei Belastung in seiner Längsrichtung ausknicken kann.

6. Federanordnung nach einem der Ansprüche 1 bis 5, dadurch gekennzeichnet, dass das mindestens eine Federelement (10, 30) einen rechteckigen, quadratischen oder runden Querschnitt aufweist.

7. Federanordnung nach einem der Ansprüche 1 bis 6, dadurch gekennzeichnet, dass das Verhältnis der Länge L des mindestens einen Federelements (10, 30) zu seiner Dicke (H) oder seinem Durchmesser sehr groß ist.

8. Federanordnung nach einem der Ansprüche 1 bis 7, dadurch gekennzeichnet, dass sich die Breite (B), die Dicke (H) oder der Durchmesser des mindestens einen Federelements (10, 30) über seine Länge verändert.

9. Federanordnung nach einem der Ansprüche 1 bis 8, dadurch gekennzeichnet, dass sie mehrere parallel zueinander angeordnete Federelemente (10) aufweist.

10. Federanordnung nach einem der Ansprüche 1 bis 9, dadurch gekennzeichnet, dass sie mehrere, hintereinander angeordnete und über seitlich in einer Kulisse (K) der Aufnahmevorrichtung (11) geführte Achselemente (16) verbundene Federelemente (10) aufweist.
